# EUROPÄISCHE PATENTSCHRIFT

(11) **EP 4 232 396 B1**
(45) Veröffentlichungstag und Bekanntmachung des Hinweises auf die Patenterteilung: **02.10.2024**
(21) Anmeldenummer: 21798588.6
(22) Anmeldetag: 18.10.2021
(51) Int. Cl.: B66F 9/14

(54) **REGALBEDIENGERÄT UND VERFAHREN ZUM AUSLAGERN EINES OBJEKTES AUS EINEM REGALFACH EINES REGALLAGERS**
SHELF SERVING DEVICE AND METHOD FOR REMOVING FROM STORAGE AN OBJECT FROM A SHELF
DISPOSITIF DE SERVICE D'UN ÉTAGÈRE ET PROCÉDÉ POUR ÉVACUER UN OBJET D'UN ÉTAGÈRE

(30) Priorität: 23.10.2020 DE 102020127921
(43) Veröffentlichungstag der Anmeldung: 30.08.2023
(73) Patentinhaber: Dambach Lagersysteme GmbH & Co. KG, 76476 Bischweier (DE)
(72) Erfinder: PFLÜGER, Thomas, 76189 Karlsruhe (DE); BRUTLER, Franz, 76571 Gaggenau (DE)
(74) Vertreter: Lichti - Patentanwälte Partnerschaft mbB
(86) Internationale Anmeldenummer: PCT/EP2021/078749
(87) Internationale Veröffentlichungsnummer: WO 2022/084216

(56) Entgegenhaltungen:
- EP-A1- 3 441 327
- DE-C1- 19 601 953
- DE-C1- 3 735 607
- ES-A1- 2 394 268
- JP-U- H04 121 925
- US-A- 3 854 616

## Beschreibung

Die Erfindung betrifft ein Regalbediengerät mit einem Fahrwagen, der längs einer auf einem Boden angeordneten linearen Führung in einem Regalgang in Richtung einer X-Achse verfahrbar ist und der einen vertikalen Mast trägt, der sich senkrecht zur X-Achse in Richtung einer vertikalen Y-Achse erstreckt, und mit einem Lastaufnahmemittel, das von einer Tragvorrichtung frei auskragt, wobei das Lastaufnahmemittel mit der Tragvorrichtung längs des Mastes vertikal verfahrbar ist und in Richtung einer Z-Achse, die senkrecht zur X-Achse und senkrecht zur Y-Achse verläuft, in ein Regalfach einfahrbar und aus diesem herausfahrbar ist.

Darüber hinaus betrifft die Erfindung ein Verfahren zum Auslagern eines Objektes aus einem Regalfach eines Regallagers, das mehrere auf Abstand nebeneinander angeordnete Regale mit einem zwischen den Regalen verlaufenden Regalgang ausweist.

Das sich wandelnde Konsumverhalten der Verbraucher führt dazu, dass immer mehr Waren im Internet bestellt und dann kurzfristig durch einen Logistik-Dienstleister zugestellt werden müssen. Zu diesem Zweck müssen sehr viele Produkte und Waren vorgehalten werden, wofür eine große Anzahl von Regallagern notwendig ist. Ein Regallager besitzt eine Vielzahl von nebeneinander auf Abstand angeordneten Regalen. Zwischen zwei benachbarten Regalen ist jeweils ein Regalgang gebildet, der von einem automatisierten Regalbediengerät befahren wird. Mittels des Regalbediengerätes kann ein gewünschtes Objekt, beispielsweise ein Behälter oder eine beladene Palette aus einem Regalfach automatisch entnommen und zu einem vor den Regalgängen gebildeten Übergabeplatz verfahren werden.

Logistikdienstleister und mittelständige Produktionsfirmen betrieben in der Regel Lager von kleiner bis mittlerer Grö-ße, die mittels eines Gabelstaplers manuell bedient werden. Die Veränderung der Logistikprozesse in Verbindung mit dem demografischen Wandel der Gesellschaft macht den Betrieb dieser manuellen Lager zunehmend unwirtschaftlich. Ein Neubau eines automatisierten Lagers ist meist keine Alternative, da geeignete Flächen fehlen oder behördliche Auflagen nur schwer zu erfüllen sind. Aus diesem Grund rücken die Umnutzungen vorhandener Lager oder die Nutzung vorhandener Gebäude und deren Ausstattung mit automatisierten Lagerlösungen zunehmen in den Vordergrund.

Den mit Gabelstaplern manuell betriebenen Regallagern gemeinsam ist die bodenebene Lagerung von Objekten oder Lasten in den unteren Regalfächern. Eine Automatisierung mit Weiternutzung der vorhandenen Regale ist nur dann sinnvoll möglich, wenn die Anzahl der Regallagerplätze weitgehend erhalten bleibt. Dies erfordert die Möglichkeit zu einer bodennahen oder bodenebenen Aufnahme und Abgabe von Objekten oder Transporteinheiten durch das automatisierte Regalbediengerät.

Dabei ist jedoch das Problem aufgetaucht, dass bei den alten Regallagern die zwischen zwei benachbarten Regalen gebildeten Regalgänge zu schmal sind, um ein beidseitig arbeitendes Regalbediengerät aufzunehmen. Insbesondere bei der Aufnahme von Lasten oder Objekten aus dem jeweils unteren Fach des Regals treten die Probleme auf, dass das Lastaufnahmemittel, beispielsweise eine Lastgabel, in Bodennähe nicht soweit zurückgezogen werden kann, dass sie vor der im unteren Fach des Regals liegenden Palette positioniert ist und in die Palette eingeschoben werden kann. Dies ist insbesondere dadurch begründet, dass am Boden des Regalgangs eine Führungsschiene vorhanden ist, die das Regalbediengerät bei dessen Bewegung längs des Regalgangs führt und deren Bauhöhe die Bewegung des Lastaufnahmemittels behindert.

Ein Regalbediengerät nach dem Oberbegriff des Anspruchs 1 ist in Dokument DE 196 01 953 C1 offenbart.

Der Erfindung liegt die Aufgabe zu Grunde, ein Regalbediengerät der genannten Art zu schaffen, mit dem auch in engen Regalgängen eine Aufnahme eines Objektes oder einer Last aus dem unteren, bodennahen oder bodenebenen Regalfach möglich ist.

Diese Aufgabe wird erfindungsgemäß mit einem Regalbediengerät mit den Merkmalen der Anspruchs 1 gelöst. Dabei ist vorgesehen, dass das Lastaufnahmemittel um eine parallel zur X-Achse verlaufenden Schwenkachse X₁ so schwenkbar ist, dass es in eine schräg nach unten zum Boden geneigte Position bringbar ist, in der ein der Tragvorrichtung abgewandtes vorderes freies Ende des Lastaufnahmemittels tiefer als ein der Tragvorrichtung zugewandtes hinteres Ende des Lastaufnahmemittels angeordnet ist.

Dieses Vorgehen ist insbesondere dann sinnvoll, wenn auf dem Boden eines Regalgangs eine nach oben hervorstehende Führungsschiene für das Regalbediengerät angeordnet ist, so dass das hintere Ende des Lastaufnahmemittels mit Abstand zum Boden des Regalgangs oberhalb der Führungsschiene angeordnet ist.

Die Erfindung geht von der Grundüberlegung aus, dass die Bewegung eines Lastaufnahmemittels, das üblicherweise horizontal und in Richtung der genannten Z-Achse in ein Regalfach eingefahren und auf diesem herausgezogen wird, weniger Platz in Richtung der Breite des Regalgangs benötigt, wenn das Lastaufnahmemittel in eine schräg nach unten zum Boden geneigte Position gebracht wird. Zur Aufnahme einer Last oder eines Objektes aus einem bodennahen unteren Regalfach wird das Lastaufnahmemittel so schräg gestellt, dass seine vorderen, freien Enden beispielsweise vor den Einführöffnungen der die Last tragenden Palette angeordnet sind, während gleichzeitig das der Tragvorrichtung zugeordnete hintere Ende des Lastaufnahmemittels angehoben und vorzugsweise oberhalb der am Boden befestigten Führungsschiene positioniert ist. Durch Kombinieren einer Schwenkbewegung um die parallel zur X-Achse verlaufenden Schwenkachse X₁ mit einer Hub- oder Absenkbewegung in Richtung der vertikalen Y-Achse und einer Einfahrbewegung in das Regalfach in Richtung der Z-Achse kann das Lastaufnahmemittel in das Regalfach beziehungsweise die dort angeordnete Palette auf einer gekrümmten Bewegungsbahn eingeführt werden. Mit einer derartigen Ausgestaltung ist es möglich, auch in relativ engen Regalgängen die unteren Regalfächer der Regale zu bestücken, ohne dass die im Regalgang angeordnete mittige Führungsschiene die Bewegung des Lastaufnahmemittels behindert.

Bei dem Lastaufnahmemittel handelt es sich vorzugsweise um eine Gabel mit zumindest zwei Gabelzinken, wobei die Gabel mit ihrem hinteren Ende an der Tragvorrichtung angebracht ist. Die Gabelzinken verlaufen in bekannter Weise auf Abstand parallel nebeneinander und sind insbesondere geradlinig ausgerichtet oder so vorgespannt, dass sie erst bei Belastung geradlinig verlaufen.

Erfindungsgemäß ist vorgesehen, dass die Tragvorrichtung zusammen mit dem Lastaufnahmemittel längs einer Querführung in Richtung der Z-Achse verschieblich und um die Schwenkachse X₁ schwenkbar ist. Dies dient dazu, das Lastaufnahmemittel in ein Regalfach einzuschieben und wieder aus diesem herauszuziehen.

Um das Lastaufnahmemittel in die schräge Position zu bringen, ist erfindungsgemäß vorgesehen, dass die Querführung an einem Führungsteil ausgebildet ist, das schwenkbar um die parallel zur X-Achse verlaufende Schwenkachse X₁ an dem Fahrwagen gelagert ist. Wenn das Führungsteil um die Schwenkachse X₁ geschwenkt wird, schwenken damit auch die Querführung und die Tragvorrichtung mit dem Lastaufnahmemittel. Auf diese Weise kann für das Lastaufnahmemittel in einfacher Weise die schräg geneigte Position eingestellt werden, bei der das Lastaufnahmemittel ausgehend von der Mitte des Regalgangs zu einer der Seiten des Regalgangs schräg nach unten geneigt verläuft.

Erfindungsgemäß ist vorgesehen, dass die Schwenkbewegung des Führungsteils um die Schwenkachse X₁ mit einer Hub- oder Absenkbewegung in Richtung der vertikalen Y-Achse und die Verschiebebewegung der Tragvorrichtung und des Lastaufnahmemittels längs der Querführung mittels einer Steuerung so überlagbar sind, dass das Lastaufnahmemittel aus seiner geneigten Position innerhalb des Regalgangs beim Einfahren in das Regalfach auf einer zumindest abschnittsweise gekrümmten Bewegungskurve in eine horizontale Aufnahmeposition verfahrbar ist. Die horizontale Aufnahmeposition ist zumindest dann erreicht, wenn das Lastaufnahmemittel unterhalb des aufzunehmenden Objektes positioniert ist und durch nachfolgendes vertikales Anheben das Objekt aufnimmt. Bei der zumindest abschnittsweise gekrümmten Bewegungskurve kann es sich um eine stetige und differenzierbare Kurve, d.h. eine kontinuierliche Kurve ohne Knicke oder Abwicklungen, handeln, alternativ kann die Bewegungskurve zumindest abschnittsweise Knicke aufweisen oder aus geraden und/oder gekrümmten Abschnitten polygonartig zusammengesetzt sein.

Mit dem erfindungsgemäßen Regalbediengerät ist der weitere Vorteil verbunden, dass ein Durchbiegungsausgleich des Lastaufnahmemittels vorgenommen werden kann. Das Lastaufnahmemittel kragt üblicherweise frei aus. Wenn es unter einer relativ schwere Last gebracht und dann die Last angehoben wird, führt das Gewicht der Last dazu, dass sich das Lastaufnahmemittel wie ein einseitig gehaltener Träger durchbiegt. Da die Last auf dem Lastaufnahmemittel aufliegt, stellt sich auch die Last schräg. Diese Schrägstellung der Last kann durch eine Schwenkbewegung des Führungsteils um die Schwenkachse X₁ ausgeglichen werden, so dass die Last dann wieder in gewünschter Weise und insbesondere horizontal ausgerichtet ist. In einer entsprechenden Ausrichtung kann die Last zuverlässig aus dem Regalfach entnommen werden.

Vorzugsweise weist die Tragvorrichtung einen mit dem Lastaufnahmemittel verbundenen Gabelträger und ein verschieblich an dem Führungsteil gelagertes Schubteil auf, wobei der Gabelträger relativ zu dem Schubteil um eine parallel zur vertikalen Y-Achse verlaufende Drehachse Y₁ schwenkbar ist. Diese Ausgestaltung ermöglicht es, das Lastaufnahmemittel innerhalb des Regalgangs oder auch in dem außerhalb des Regalgangs gebildeten Vorraum um eine vertikale Achse zu drehen und somit in gewünschter Weise auszurichten.

Um in besonders engen Regalgängen das Einführen des Lastaufnahmemittels unter eine Last zu erleichtern, die im unteren Regalfach beziehungsweise auf dem Boden steht, kann in Weiterbildung der Erfindung vorgesehen sein, dass das Lastaufnahmemittel einen hinteren, an der Tragvorrichtung angebrachten ersten Tragabschnitt und einen vorderen zweiten Tragabschnitt aufweist, die gelenkig miteinander verbunden sind. Die relative Verstellung zwischen dem ersten Tragabschnitt und dem zweiten Tragabschnitt ist vorzugsweise durch entsprechende Anschläge so beschränkt, dass auf der Oberseite des Lastaufnahmemittels beziehungsweise auf den Oberseiten des ersten Tragabschnitts und des zweiten Tragabschnitts ein maximaler Winkel von 180° und somit ein glatter stetiger Übergang gebildet ist. Dieser Winkel lässt sich durch Schwenken des zweiten Tragabschnitts relativ zum ersten Tragabschnitt jedoch verkleinern, wodurch das Einführen des vorderen Endes des Lastaufnahmemittels und somit des zweiten Tragabschnittes in den Bereich unterhalb der aufzunehmenden Last erleichtert ist.

Das Verfahren betrifft das Auslagern eines Objektes aus einem Regalfach eines Regallagers, das mehrere auf Abstand nebeneinander angeordnete Regale mit einem zwischen den Regalen verlaufenden Regalgang aufweist, wobei für das Verfahren vorzugsweise ein Regalbediengerät mit dem vorgenannten Aufbau verwendet wird. Zum Auslagern des Objektes wird das Lastaufnahmemittel im Regalgang neben dem Regalfach positioniert, in dem sich das auszulagernde Objekt befindet. Das Lastaufnahmemittel wird in die geneigte Position gebracht, in der das dem aufzunehmenden Objekt zugewandte freie Ende des Lastaufnahmemittels tiefer als das dem Objekt abgewandte hintere Ende des Lastaufnahmemittels angeordnet ist. Anschließend wird das Lastaufnahmemittel unter Überlagerung einer Schwenkbewegung um die parallel zur X-Achse verlaufende Schwenkachse X₁ mit einer Hub- oder Absenkbewegung in Richtung der vertikalen Y-Achse und einer Einfahrbewegung in das regalfach in Richtung der Z-Achse auf einer zumindest abschnittsweise und vorzugsweise über ihre gesamte Länge gekrümmten Bewegungskurve in das Regalfach unter das aufzunehmende Objekt eingefahren und das Lastaufnahmemittel anschließend zusammen mit dem Objekt angehoben und aus dem Regalfach herausgezogen.

Das Einlagern eines Objektes in ein entsprechendes Regalfach geschieht in umgekehrter Reihenfolge und ist durch die Erfindung ausdrücklich mit umfasst.

Weitere Einzelheiten und Merkmale der Erfindung sind aus der folgenden Beschreibung eines Ausführungsbeispiels unter Bezugnahme auf die Zeichnung ersichtlich.

Es zeigen:
- Fig. 1: eine perspektivische Ansicht des unteren Bereichs eines erfindungsgemäßen Regalbediengeräts,
- Fig. 2: verschiedene Positionierungen des Lastaufnahmemittels während der Einschubbewegung unter das aufzunehmende Objekt,
- Fig. 3: eine alternative Ausgestaltung des Lastaufnahmemittels,
- Fig. 4: das Regalbediengerät in einer ersten Phase des Auslagerns eines Objektes aus einem Regalfach,
- Fig. 5: das Regalbediengerät in einer zweiten Phase des Auslagerns des Objektes aus dem Regalfach,
- Fig. 6: das Regalbediengerät in einer dritten Phase des Auslagerns des Objektes aus dem Regalfach,
- Fig. 7: das Regalbediengerät in einer vierten Phase des Auslagerns des Objektes aus dem Regalfach,
- Fig. 8: das Regalbediengerät in einer fünften Phase des Auslagerns des Objektes aus dem Regalfach,
- Fig. 9: das Regalbediengerät in einer sechsten Phase des Auslagerns des Objektes aus dem Regalfach und
- Fig. 10: das Regalbediengerät mit ausgelagertem Objekt.

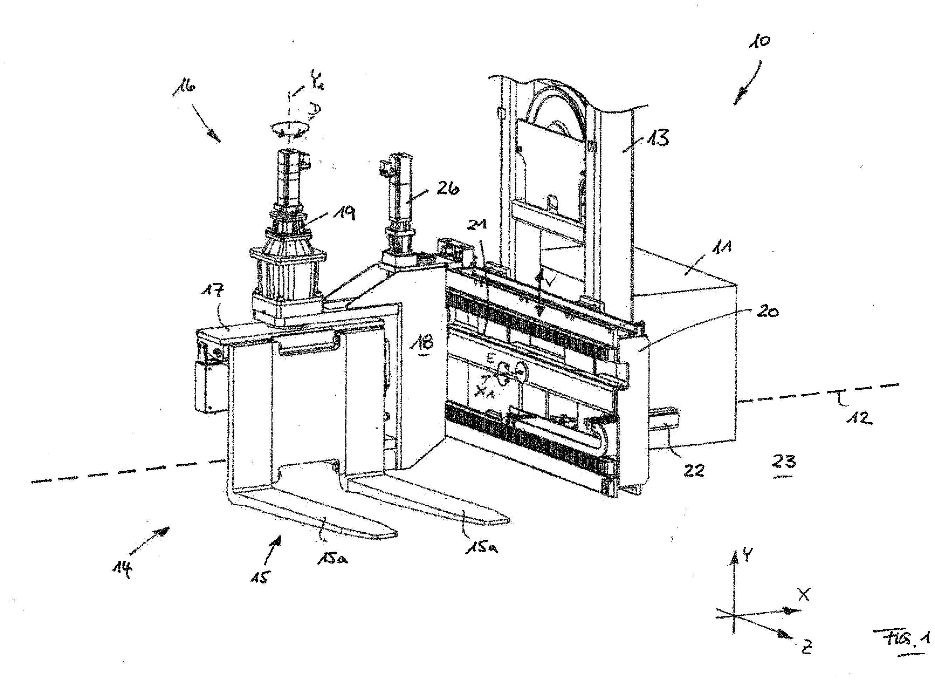

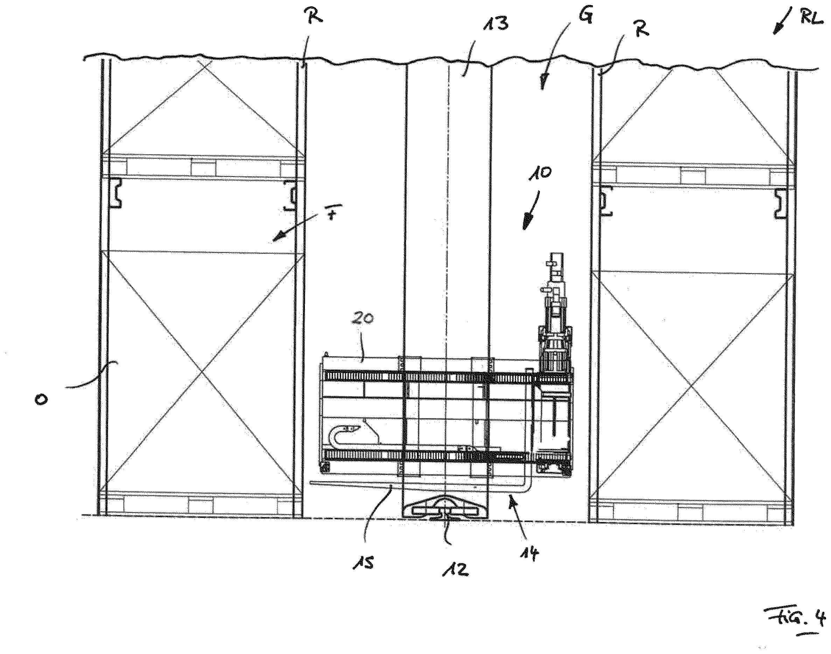

Fig. 1 zeigt den unteren Bereich eines Regalbediengerätes 10, das einen nur schematisch angedeuteten Fahrwagen 11 aufweist, der entlang einer ebenfalls nur schematisch angedeuteten Führung 12, beispielsweise einer Führungsschiene in Richtung einer X-Achse in üblicher Weise verfahren werden kann. Die Führung 12 ist auf einem Boden 23 eines Regalgangs G (s. Fig. 4) angeordnet.

Das Regalbediengerät 10 weist einen vertikalen Mast 13 auf, der sich senkrecht zur X-Achse in Richtung einer vertikalen Y-Achse erstreckt. An dem Mast 13 ist ein block- oder gehäuseartiges Führungsteil 20 gelagert, das längs des Mastes 13 vertikal verfahrbar ist, wie es durch den Doppelpfeil V angedeutet ist. Das Führungsteil 20 ist darüber hinaus relativ zum Mast 13 mittels eines Schwenkantriebs 22 um eine Schwenkachse X₁ schwenkbar, die sich parallel zur X-Achse erstreckt. Die Schwenkbarkeit des Führungsteils 20 relativ zum Mast 13 ist durch den Doppelpfeil E angedeutet.

An dem Führungsteil 20 ist eine lineare Querführung 21 ausgebildet, die sich in Richtung einer Z-Achse erstreckt, die senkrecht zur X-Achse und senkrecht zur Y-Achse und somit üblicherweise in Querrichtung des Regalgangs G verläuft.

Eine Tragvorrichtung 16 besitzt einen Gabelträger 17 und ein Schubteil 18. Das Schubteil 18 greift in die Querführung 21 des Führungsteils 20 ein und ist mittels eines Schubantriebs 26 längs der Querführung 21 und somit in Richtung der Z-Achse relativ zum Führungsteil 20 verfahrbar. An dem dem Führungsteil 20 abgewandten Ende des Schubteils 18 ist der Gabelträger 17 gelenkig an das Schubteil 20 angeschlossen. Der Gabelträger 17 kann um eine vertikale Drehachse Y₁ mittels eines Drehantriebs 19 relativ zum Schubteil 18 verdreht werden, wie es durch den Doppelpfeil D angedeutet ist. Die Drehachse Y₁ verläuft parallel zur Y-Achse.

An dem Gabelträger 17 ist ein Lastaufnahmemittel 14 in Form einer Gabel 15 angebracht, die zwei parallel auf Abstand angeordnete Gabelzinken 15a aufweist, die sich in den in Fig. 1 dargestellten Zustand in Richtung der Z-Achse erstrecken und von dem Gabelträger 17 frei auskragen.

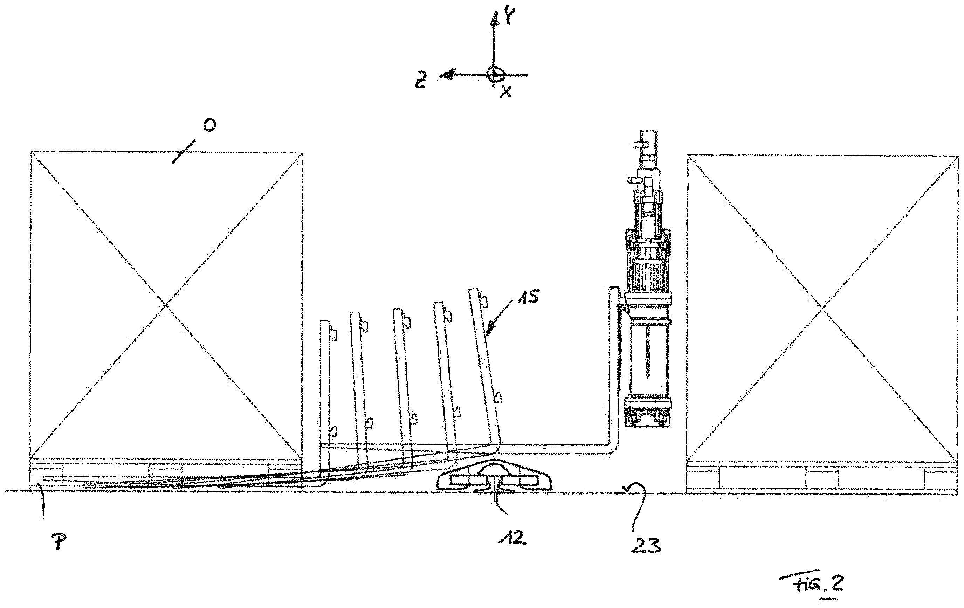

Fig. 2 zeigt in einer schematischen Seitenansicht die einzelnen Phasen einer Einschubbewegung der Gabel 15 des Regalbediengerätes unter ein aufzunehmendes Objekt O, das unter Zwischenschaltung einer Palette P auf dem Boden aufgelagert ist.

Die Gabel 15 befindet sich zunächst in einer gemäß Fig. 2 rechten Ausgangslage, in der sie oberhalb der Führung 12 angeordnet ist und in der sich die Gabelzinken 15a im Wesentlichen horizontal erstrecken. Die Gabel 15 wird dann durch Schwenkung des in Fig. 2 nicht dargestellten Führungsteils 20 in eine schräg nach unten zum Boden 23 geneigte Position gebracht und in Richtung der Z-Achse und somit in Richtung des Objektes O verschoben, wobei die vorderen Enden der Gabelzinken 15a in die Palette P eintauchen.

Vorzugsweise bereits dann, wenn die Gabel 15 oberhalb der Führung 12 angeordnet ist und insbesondere dann, wenn sie seitlich von dieser angeordnet ist, wird die Gabel 15 in Richtung des Bodens 23 abgesenkt und durch Schwenkung des Führungsteils 20 wieder in eine horizontale Ausrichtung gebracht, in der die Gabelzinken 15a vollständig oder zumindest weitestgehend innerhalb der Palette P und unterhalb des Objektes O angeordnet sind. Die Verstellung der Gabel 15 erfolgt dabei vorzugsweise auf einer stetigen und differenzierbaren Bewegungskurve, d.h. ohne Knicke oder Abwinklungen.

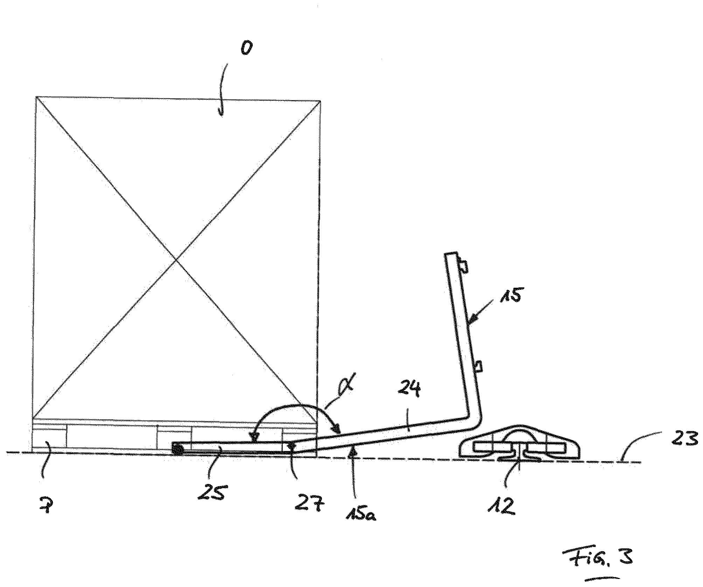

Fig. 3 zeigt eine Weiterbildung der Gabel 15, die in üblicher Weise an dem Gabelträger 17 anbringbar ist. Der Gabelzinken 15a ist in zwei Abschnitte, nämlich einen hinteren ersten Tragabschnitt 24 und einen vorderen zweiten Tragabschnitt 25 unterteilt, wobei der erste Tragabschnitt 24 und der zweite Tragabschnitt 25 über ein Gelenk 27 gelenkig miteinander verbunden sind. Der vordere zweite Tragabschnitt 25 kann somit relativ zu dem ersten Tragabschnitt 24 abgewinkelt werden, wobei zwischen der Oberseite des ersten Tragabschnitts 24 und der Oberseite des zweiten Tragabschnitts 25 ein Winkel α gebildet ist. Dabei ist beispielsweise durch Anschläge sichergestellt, dass der Winkel α nicht größer als 180° ist, d.h. dass der vordere zweite Tragabschnitt 25 entweder mit dem hinteren ersten Tragabschnitt 24 in Fluchtung ist (α=180°) oder relativ zu dem hinteren ersten Tragabschnitt 24 schräg nach oben abgewinkelt ist (α<180°). Durch die Abwinkelbarkeit des zweiten Tragabschnitts 25 relativ zum ersten Tragabschnitt 24 lässt sich das vordere Ende des Gabelzinken 15a noch einfacher in die das aufzunehmende Objekt tragende Palette P einführen, wie es aus Fig. 3 ersichtlich ist.

In den Fig. 4 bis 10 werden die einzelnen Phasen des Auslagerns eines Objektes O aus einem Regalfach F eines Regallagers RL dargestellt. Das Regallager RL weist mehrere auf Abstand nebeneinander angeordnete Regale R auf, wobei zwischen den Regalen R ein senkrecht zur Zeichenebene gemäß Fig. 4 verlaufender Regalgang G vorgesehen ist. In dem Regalgang G ist eine längs des Regalgangs G verlaufende Führung 12 angeordnet. Längs der Führung 12 kann ein Regalbediengerät 10 verfahren werden, das den zuvor beschriebenen Aufbau aufweisen kann. Zunächst wird das Regalbediengerät 10 mit seinem Lastaufnahmemittel 14 bzw. seiner Gabel 15 im Regalgang G neben demjenigen Regalfach F positioniert, in dem sich das auszulagernde Objekt O befindet. Die Gabel 15 ist dabei mit im Wesentlichen horizontaler Ausrichtung ihrer Gabelzinken 15a oberhalb der Führung 12 angeordnet. Dieser Zustand ist in Fig. 4 dargestellt.

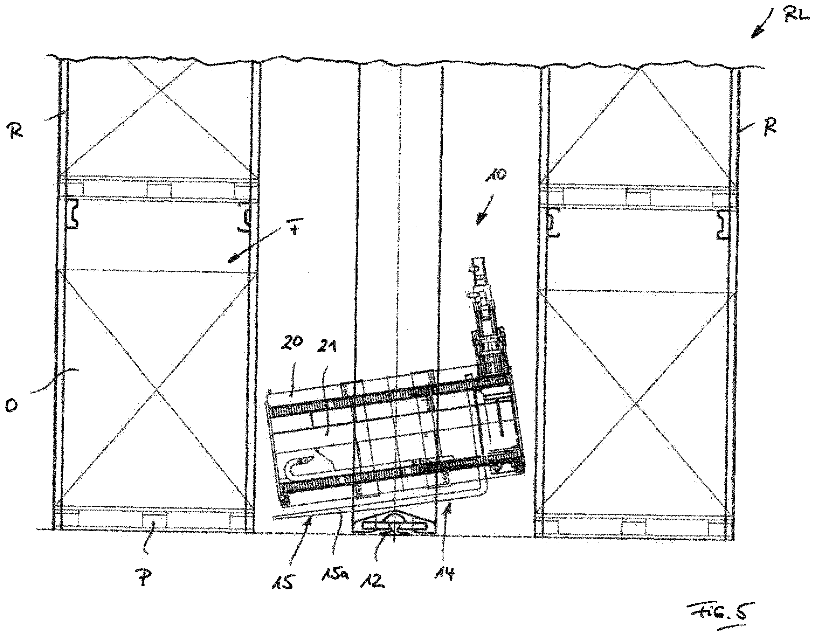

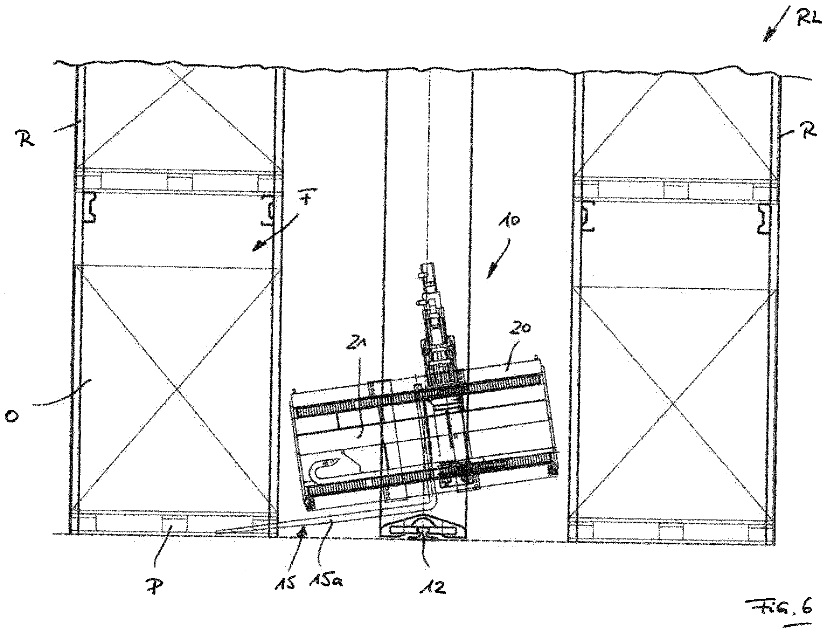

Das Lastaufnahmemittel 14 bzw. die Gabel 15 wird dann in eine geneigte Position gebracht, in der das dem aufzunehmenden Objekt O zugewandte freie Ende der Gabelzinken 15a tiefer als das dem Objekt O abgewandte hintere Ende der Gabelzinken 15a angeordnet ist. Dieser Zustand ist in Fig. 5 dargestellt. Die Gabel 15 wird dann längs der Querführung 21 des Führungsteils 20 verfahren, bis die vorderen Enden der Gabelzinken 15 in die das aufzunehmende Objekt O tragende Palette P eintauchen. Dieser Zustand ist in Fig. 6 dargestellt.

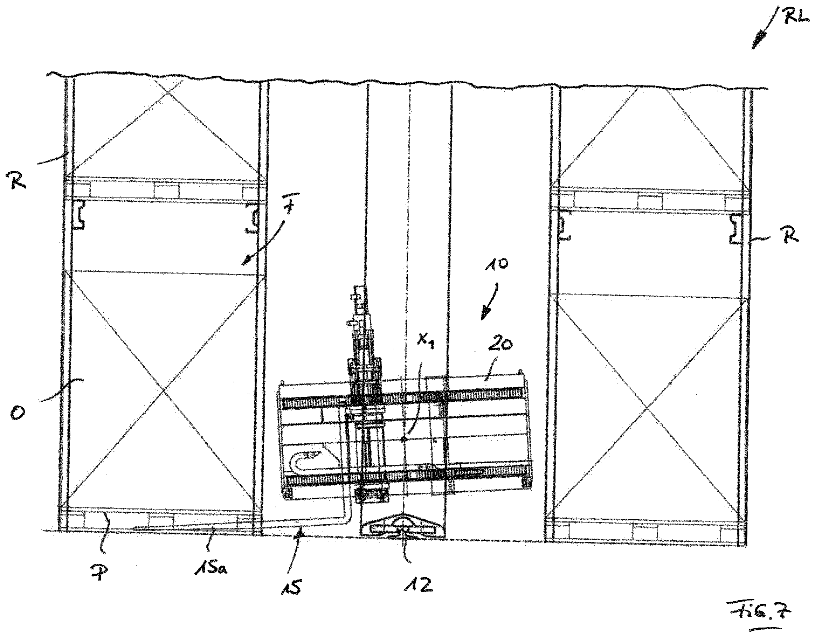

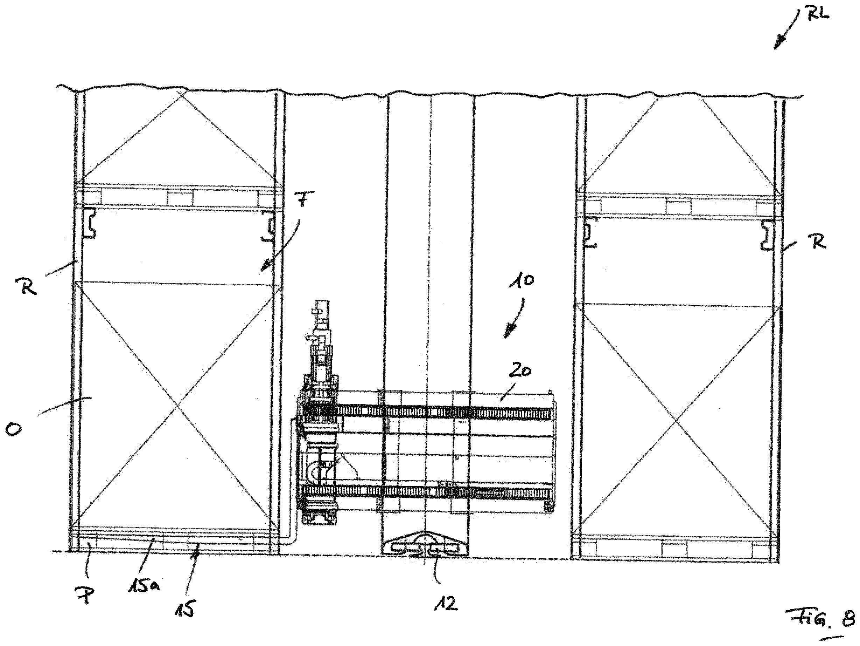

Im weiteren Verlauf des Auslagervorgangs des Objektes O wird dann die Schwenkbewegung des Führungsteils 20 um die parallel zur X-Achse verlaufende Schwenkachse X₁ mit der linearen Einfahrbewegung der Gabel 15 in die Palette P in Richtung der Z-Achse überlagert (s. Fig. 7) bis die Gabelzinken 15a der Gabel 15 in horizontaler Ausrichtung innerhalb der Palette P unterhalb des aufzunehmenden Objektes O angeordnet sind, wie es in Fig. 8 dargestellt ist.

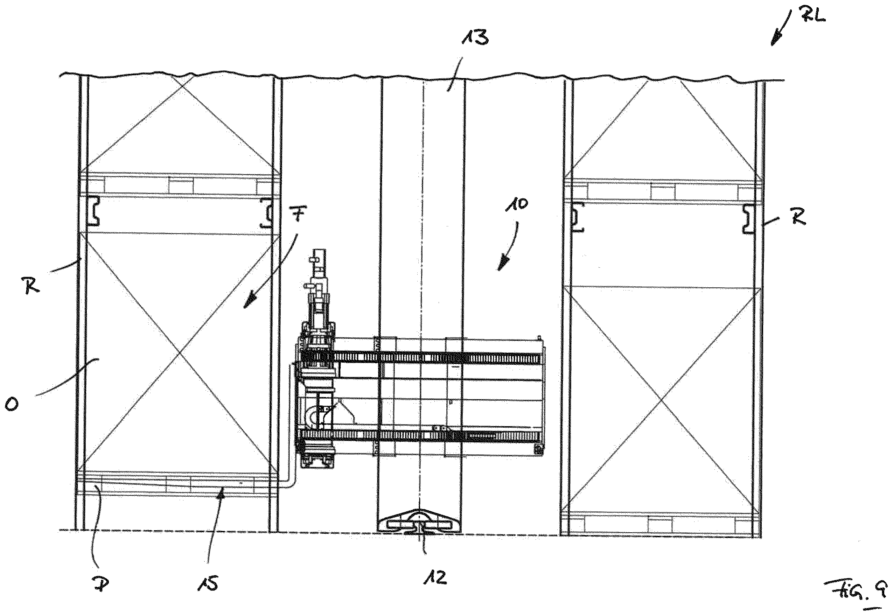

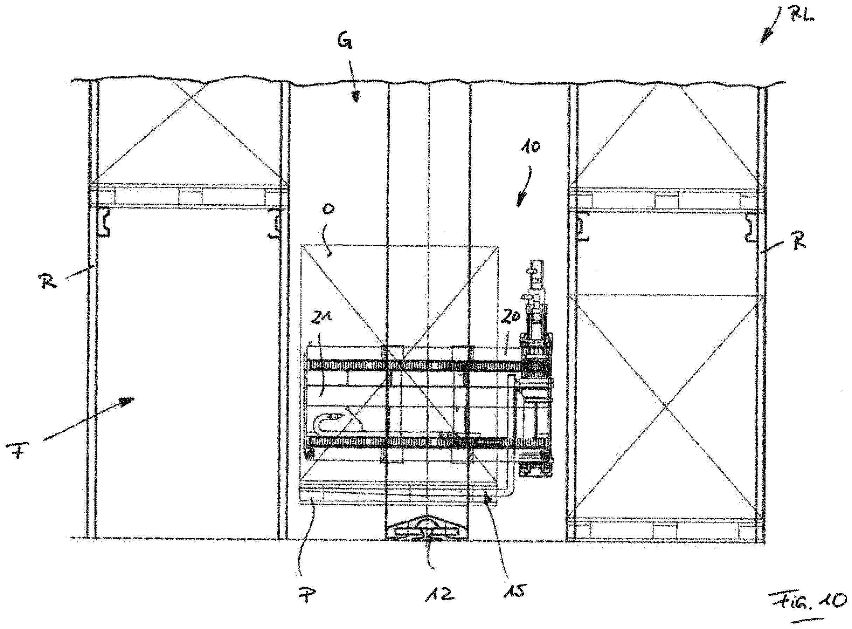

Das Führungsteil 20 wird dann entlang dem Mast 13 angehoben, wodurch auch die Gabel 15 und mit ihr die Palette P und das auf dieser angeordnete Objekt O angehoben werden, wie es in Fig. 9 dargestellt ist. Die Gabel 15 wird dann längs der Querführung 21 des Führungsteils 20 soweit zurückgezogen, bis das aufgenommene Objekt O sich innerhalb des Regalgangs G befindet, wie es in Fig. 10 dargestellt ist.

## Patentansprüche

1. Regalbediengerät (10) mit einem Fahrwagen (11), der längs einer auf einem Boden (23) angeordneten linearen Führung (12) in einem Regalgang (G) in Richtung einer X-Achse verfahrbar ist und der einen vertikalen Mast (13) trägt, der sich senkrecht zur X-Achse in Richtung einer vertikalen Y-Achse erstreckt, und mit einem Lastaufnahmemittel (14), das von einer Tragvorrichtung (16) frei auskragt, wobei das Lastaufnahmemittel (14) mit der Tragvorrichtung (16) längs des Mastes (13) vertikal verfahrbar ist und in Richtung einer Z-Achse, die senkrecht zur X-Achse und senkrecht zur Y-Achse verläuft, in ein Regalfach (F) einfahrbar und aus diesem herausfahrbar ist, wobei das Lastaufnahmemittel (14) um eine parallel zur X-Achse verlaufenden Schwenkachse X₁ so schwenkbar ist, dass es in eine schräg nach unten zum Boden geneigte Position bringbar ist, in der ein der Tragvorrichtung (16) abgewandtes vorderes freies Ende des Lastaufnahmemittels (14) tiefer als ein der Tragvorrichtung (16) zugewandtes hinteres Ende des Lastaufnahmemittels (14) angeordnet ist, **dadurch gekennzeichnet, dass** die Tragvorrichtung (16) zusammen mit dem Lastaufnahmemittel (14) längs einer Querführung (21) in Richtung der Z-Achse verschieblich und um die Schwenkachse X₁ schwenkbar ist, wobei die Querführung (21) an einem Führungsteil (20) ausgebildet ist, das schwenkbar um die parallel zur X-Achse verlaufende Schwenkachse X₁ an dem Fahrwagen (11) gelagert ist, und wobei die Schwenkbewegung des Führungsteils (20) um die Schwenkachse X₁ in Richtung der vertikalen Y-Achse mit einer Hub- oder Absenkbewegung und die Verschiebebewegung der Tragvorrichtung (16) und des Lastaufnahmemittels (14) längs der Querführung (21) mittels einer Steuerung so überlagerbar sind, dass das Lastaufnahmemittel (14) aus seiner geneigten Position innerhalb des Regalgangs (G) beim Einfahren in das Regalfach (F) auf einer zumindest abschnittsweise gekrümmten Bewegungskurve in eine horizontale Aufnahmeposition unterhalb eines aufzunehmenden Objektes (O) verfahrbar ist.

2. Regalbediengerät nach Anspruch 1, **dadurch gekennzeichnet, dass** das Lastaufnahmemittel (14) eine Gabel (15) mit zumindest zwei Gabelzinken (15a) aufweist, wobei die Gabel (15) mit ihrem hinteren Ende an der Tragvorrichtung (16) angebracht ist.

3. Regalbediengerät nach Anspruch 1 oder 2, **dadurch gekennzeichnet, dass** die Bewegungskurve stetig und differenzierbar ist.

4. Regalbediengerät nach einem der Ansprüche 1 bis 3,
**dadurch gekennzeichnet, dass** die Tragvorrichtung (16) einen mit dem Lastaufnahmemittel (14) verbundenen Gabelträger (17) und ein verschieblich an dem Führungsteil (20) gelagertes Schubteil (18) aufweist, wobei der Gabelträger (17) relativ zum Schubteil (18) um eine parallel zur vertikalen Y-Achse verlaufende Drehachse Y₁ schwenkbar ist.

5. Regalbediengerät nach einem der Ansprüche 1 bis 4,
**dadurch gekennzeichnet, dass** das Lastaufnahmemittel (14) einen hinteren, an der Tragvorrichtung (16) angebrachten ersten Tragabschnitt (24) und einen vorderen zweiten Tragabschnitt (25) aufweist, die gelenkig miteinander verbunden sind.

6. Verfahren zum Auslagern eines Objektes (O) aus einem Regalfach (F) eines Regallagers (RL), das mehrere auf Abstand nebeneinander angeordnete Regale (R) mit einem zwischen den Regalen (R) verlaufenden Regalgang (G) aufweist, insbesondere mit einem Regalbediengerät (10) nach einem der Ansprüche 1 bis 5, wobei das Lastaufnahmemittel (14) im Regalgang (G) neben dem Regalfach (F) positioniert wird, in dem sich das auszulagernde Objekt (O) befindet, wobei das Lastaufnahmemittel (14) in die geneigte Position gebracht wird, in der das dem aufzunehmenden Objekt (O) zugewandte freie Ende des Lastaufnahmemittels (14) tiefer als das dem Objekt (O) abgewandte hintere Ende des Lastaufnahmemittels (14) angeordnet ist, wobei das Lastaufnahmemittel (14) anschließend unter Überlagerung einer Schwenkbewegung um die parallel zur X-Achse verlaufende Schwenkachse X₁ mit einer Hub- oder Absenkbewegung in Richtung der vertikalen Y-Achse und einer Einfahrbewegung in das Regalfach (F) in Richtung der Z-Achse auf einer zumindest abschnittsweise gekrümmten Bewegungskurve in das Regalfach (F) unter das aufzunehmende Objekt (O) eingefahren wird und wobei das Lastaufnahmemittel (14) anschließend zusammen mit dem Objekt (O) angehoben und aus dem Regalfach (F) herausgezogen wird.

## Claims

1. A storage and retrieval unit (10), having a carriage (11), which is displaceable along a linear guide (12) arranged on a floor (23) in a shelf aisle (G) in the direction of an X axis, and which supports a vertical mast (13) which extends perpendicular to the X axis in the direction of a vertical Y axis, and having a load receiving means (14) mounted by only one end on a support device (16), wherein the load receiving means (14) can be moved vertically together with the support device (16) along the mast (13) and can be moved into and out of a shelf compartment (F) in the direction of a Z axis which runs perpendicular to the X axis and perpendicular to the Y axis, wherein the load receiving means (14) can be pivoted about a pivot axis X₁ running parallel to the X axis in such a way that it can be brought into a position inclined downward towards the floor, in which position a front free end of the load receiving means (14) remote from the support device (16) is arranged lower than a rearward end of the load receiving means (14) close to the support device (16), **characterized in that** the support device (16) together with the load receiving means (14) is displaceable along a transverse guide (21) in the direction of the Z axis and is pivotable about the pivot axis X_{1,} wherein the transverse guide (21) is formed on a guide part (20) which is pivotable on the carriage (11) about the pivot axis X₁ running parallel to the X axis and wherein the pivoting movement of the guide part (20) about the pivot axis X₁ in the direction of the vertical Y axis can be superimposed with a lifting or lowering movement, and the displacement movement of the support device (16) and of the load receiving means (14) along the transverse guide (21) can be superimposed, by means of a controller, in such a way that the load receiving means (14) can be moved along an at least partially curved path of movement from its inclined position within the shelf aisle (G) into a horizontal receiving position below on object (O) to be taken when it is moved into the shelf compartment (F).

2. The storage and retrieval unit according to claim 1, **characterized in that** the load receiving means (14) has a fork (15) with at least two prongs (15a), wherein the rearward end of the fork (15) is fastened to the support device (16).

3. The storage and retrieval unit according to claim 1 or 2, **characterized in that** the curved path of movement is continuous and differentiable.

4. The storage and retrieval unit according to any of claims 1 to 3, **characterized in that** the support device (16) has a fork carriage (17) connected to the load receiving means (14) and a thrust part (18) mounted displaceably on the guide part (20), wherein the fork carriage (17) is pivotable relative to the thrust part (18) about an axis of rotation Y₁ running parallel to the vertical Y axis.

5. The storage and retrieval unit according to any of claims 1 to 4, **characterized in that** the load receiving means (14) has a rear first support portion (24) fastened to the support device (16) and a front, second supporting portion (25), which are connected to one another with articulation.

6. A method for retrieving an object (O) from a shelf compartment (F) of a shelf storage system (RL) comprising a plurality of shelves (R) arranged next to each other with a spacing, with a shelf aisle (G) extending between the shelves (R), in particular with a storage and retrieval unit (10) according to any of the claims 1 to 5, wherein the load receiving means (14) is positioned in the shelf aisle (G) next to the shelf compartment (F) in which the object (O) to be retrieved is located, wherein the load receiving means (14) is brought into the inclined position, in which the free end of the load receiving means (14) close to the object (O) to be received is arranged lower than the rearward end of the load receiving means (14) remote from the object (O), wherein the load receiving means (14) is subsequently inserted, along an at least partially curved path of movement, into the shelf compartment (F) under the object (O) to be received, with a pivoting movement about the pivot axis X₁ running parallel to the X axis being superimposed with a lifting or lowering movement in the direction of the vertical Y axis, and with an insertion movement into the shelf compartment (F) in the direction of the Z axis, and wherein the load receiving means (14) is subsequently lifted together with the object (O) and pulled out of the shelf compartment (F).

## Revendications

1. Dispositif de service d'une étagère (10) comportant un chariot (11) qui peut être déplacé le long d'un guide linéaire (12) disposé sur un sol (23) dans une allée d'étagères (G) dans la direction d'un axe X et qui porte un mât vertical (13) s'étendant perpendiculairement à l'axe X dans la direction d'un axe Y vertical, et comportant un moyen de réception de charge (14) qui est librement en porte-à-faux par rapport à un dispositif porteur (16), dans lequel le moyen de réception de charge (14) peut être déplacé verticalement avec le dispositif porteur (16) le long du mât (13) et dans la direction d'un axe Z qui s'étend perpendiculairement à l'axe X et perpendiculairement à l'axe Y, peut être introduit dans une tablette (F) et en être retiré, dans lequel le moyen de réception de charge (14) peut pivoter autour d'un axe de pivotement X₁ s'étendant parallèlement à l'axe X de telle sorte qu'il peut être amené dans une position inclinée vers le bas par rapport au sol, position dans laquelle une extrémité libre avant du moyen de réception de charge (14), opposée au dispositif porteur (16), est disposée plus bas qu'une extrémité arrière du moyen de réception de charge (14), tournée vers le dispositif porteur (16), **caractérisé en ce que** le dispositif porteur (16) peut être déplacé conjointement avec le moyen de réception de charge (14) le long d'un guide transversal (21) dans la direction de l'axe Z et peut pivoter autour de l'axe de pivotement X_{1,} dans lequel le guide transversal (21) est réalisé sur une pièce de guidage (20) qui est montée sur le chariot (11) de manière à pouvoir pivoter autour de l'axe de pivotement X₁ s'étendant parallèlement à l'axe X, et dans lequel le mouvement de pivotement de la pièce de guidage (20) autour de l'axe de pivotement X₁ dans la direction de l'axe Y vertical avec un mouvement de levage ou d'abaissement et le mouvement de déplacement du dispositif porteur (16) et du moyen de réception de charge (14) le long du guide transversal (21) peuvent être superposés à l'aide d'une commande, de telle sorte que le moyen de réception de charge (14) peut être déplacé de sa position inclinée à l'intérieur de l'allée d'étagères (G) lors de l'entrée dans la tablette (F) sur une courbe de mouvement incurvée au moins dans certaines sections à une position de réception horizontale en dessous d'un objet (O) à recevoir.

2. Dispositif de service d'une étagère selon la revendication 1,
**caractérisé en ce que** le moyen de réception de charge (14) présente une fourche (15) comportant au moins deux dents de fourche (15a), dans lequel la fourche (15) est fixée au dispositif porteur (16) par son extrémité arrière.

3. Dispositif de service d'une étagère selon la revendication 1 ou 2,
**caractérisé en ce que** la courbe de mouvement est continue et différentiable.

4. Dispositif de service d'une étagère selon l'une des revendications 1 à 3,
**caractérisé en ce que** le dispositif porteur (16) présente un porte-fourche (17) relié au moyen de réception de charge (14) et une pièce de poussée (18) montée coulissante sur la pièce de guidage (20), dans lequel le porte-fourche (17) peut pivoter par rapport à la pièce de poussée (18) autour d'un axe de rotation Y₁ s'étendant parallèlement à l'axe Y vertical.

5. Dispositif de service d'une étagère selon l'une des revendications 1 à 4,
**caractérisé en ce que** le moyen de réception de charge (14) présente une première section porteuse (24) arrière montée sur le dispositif porteur (16) et une seconde section porteuse (25) avant, lesquelles première et seconde sections sont reliées entre elles de manière articulée.

6. Procédé d'évacuation d'un objet (O) d'une tablette (F) d'un magasin à étagères (RL) qui présente plusieurs étagères (R) disposées à distance les unes à côté des autres, les étagères (R) comportant une allée d'étagères (G) s'étendant entre elles, comportant en particulier un dispositif de service d'une étagère (10) selon l'une des revendications 1 à 5, dans lequel le moyen de réception de charge (14) est positionné dans l'allée d'étagères (G) à côté de la tablette (F) dans lequel se trouve l'objet (O) à évacuer, dans lequel le moyen de réception de charge (14) est amené dans la position inclinée dans laquelle l'extrémité libre, tournée vers l'objet (O) à recevoir, du moyen de réception de charge (14) est disposée plus bas que l'extrémité arrière, opposée à l'objet (O), du moyen de réception de charge (14), dans lequel le moyen de réception de charge (14) est ensuite rétracté par superposition d'un mouvement de pivotement autour de l'axe de pivotement X₁ s'étendant parallèlement à l'axe X à un mouvement de levage ou d'abaissement dans la direction de l'axe Y vertical et à un mouvement d'introduction dans l'étagère (F) dans la direction de l'axe Z sur une courbe de mouvement incurvée au moins dans certaines sections dans l'étagère (F) en dessous de l'objet (O) à recevoir, et dans lequel le moyen de réception de charge (14) est ensuite soulevé conjointement avec l'objet (O) et retiré de l'étagère (F).
